# EUROPEAN PATENT SPECIFICATION

(11) **EP 2 463 251 B1**
(45) Date of publication and mention of the grant of the patent: **04.09.2013**
(21) Application number: 11009589.0
(22) Date of filing: 05.12.2011
(51) Int. Cl.: C03B 37/012

(54) **Methods of incorporating materials of interest in glass optical waveguides**
Verfahren zum Einbinden von Materialien von Interessen in Glaslichtwellenleiter
Procédé de l'incorpration de matériaux d'intérêts dans des guides d'ondes optiques en verre

(30) Priority: 10.12.2010 US 459324 P; 01.12.2011 US 201113308600
(43) Date of publication of application: 13.06.2012
(73) Proprietor: Schott Corporation, Elmsford NY 10523 (US)
(72) Inventor: Tabor, Kevin F., Webster Massachusetts 01570 (US); Higby, Paige L., Holland Massachusetts 01521 (US)
(74) Representative: Herden, Andreas F.

(56) References cited:
- WO-A1-00/26711
- US-A- 5 838 868
- US-A1- 2005 135 759
- US-A1- 2010 251 771
- PHILIPP KORNREICH ET AL: "Semiconductor Cylinder Fibers", JOURNAL OF LIGHTWAVE TECHNOLOGY, IEEE SERVICE CENTER, NEW YORK, NY, US, vol. 14, no. 7, 1 July 1996 (1996-07-01), XP011028601, ISSN: 0733-8724

## Description

### BACKGROUND

Embodiments and implementations of the present invention relate generally to internally-reflecting waveguides, such as optical fibers, and to waveguide arrays fabricated by adjacently fusing a plurality of such waveguides.

Waveguide arrays such as optical fiber faceplates are widely implemented in imaging applications such as, by way of non-limiting example, x-ray imagers. In various such devices, one face of the faceplate is coated with a scintillating material that, when impinged upon by x-rays, emits radiation in another region of the electromagnetic spectrum (e.g., the visible region). In some cases, a scintillating material is incorporated within the constituent optical fibers of a waveguide array by coating at least one of the core bars (or rods) and the interior of the cladding tubes with the scintillating material before heating and drawing these components to form the "mono rods" that are eventually bundled, heated and drawn to form fused waveguide arrays.

While methods such as those described above have proven useful in incorporating a scintillating material, or other material of interest, into the constituent waveguide elements of waveguide arrays, these methods result in the limited inclusion of the material of interest at the end faces of the constituent waveguide elements (e.g., optical fibers) and/or the interfaces between the mutually fused cores and claddings. It has been observed that the inclusion of a more even cross-sectional distribution of a selected material of interest within the cores of individual waveguide elements (e.g., optical fibers) would substantially enhance the performance of the specialized waveguide arrays in which these constituent elements are incorporated. However, the inclusion of any one of numerous selected materials of interest into the molten-glass batches used to form the core bars attendant to optical fiber fabrication is rendered impracticable by the fact that these materials, which are often of crystalline structure, readily dissolve in molten glass. With the dissolution of a material of interest comes the loss of the special property for which that material is being incorporated.

Document WO 00/26711 discloses a method of fabricating a cylindrical optical fiber containing a particulate optically active film. The fiber is fabricated by placing a glass rod inside of a larger diameter glass tube and then by drawing with a conventional drawing tower. The document discloses a particulate optically active material that is disposed between the core and the cladding.

Document US 2010/0251771 A1 discloses a method for fabricating doped quartz glass, particularly laser-active quartz glass. The doped quartz glass according to the invention contains at least one dopant in a homogenous distribution, wherein a suspension is provided containing amorphous SiO2 particles and at least one starting compound for the at least one dopant or of a precursor substance thereof. The starting compound includes the dopant.

Document US 2005/0135759 A1 discloses a fiber assembly comprising nanoparticles, wherein said nanoparticles are a mixture of nanomagnetic particles and nanooptical particles. A nanoparticle cluster is disclosed comprising nanoparticles with different functionalities.

Accordingly, there exists a need for a method of fabricating a glass-based, internally-reflecting optical waveguide having a light-transmissive core with a cross-sectional distribution of a material of interest characterized by a property of interest that would be lost in molten glass.

### SUMMARY

Implementations of the present invention are applicable to the fabrication of glass optical waveguides incorporating, in an undissolved state, a material of interest that is soluble in molten glass. Various aspects of the inventive process address the formation of an optical waveguide including a core with a relatively uniform cross-sectional distribution of the undissolved material of interest. Examples of optical waveguides that can be fabricated through alternative implementations of the inventive process are flexible and fused optical fibers and various light-transmitting and image-transmitting matrices (or arrays) made from a plurality of individual optical fibers ("monofibers"). More specifically, various implementations are applicable to the fabrication of specialized optical fiber image-conducting devices including, by way of non-limiting example, (i) elongated fused image bundles, including "straight-throughs," image-rotating bundles (e.g., inverters), and fused tapers such as magnifiers/reducers and (ii) non-elongated image conductors such as optical fiber faceplates. Common to the fabrication of the aforementioned devices is the formation of monofibers, each of which monofibers is created by heating and collapsing a cladding tube around a core rod in accordance with the well-known rod-in-tube method. Plural monofibers are subsequently bundled, heated and drawn to form what is commonly referred to as a "multi." Plural "multies" can then be subsequently bundled, heated and drawn to form a "multi-multi."

It is important to establish that, throughout the present specification, optical elements employed in the fabrication of individual waveguides and arrays are variously referred to as "rods," "filaments" or "fibers," for example. Although the terms "filament," "fiber," "rod," "cane," "bar," and the like, may be regarded by a reader as having somewhat different meanings, these terms are used interchangeably for purposes of the specification and claims. Accordingly, for example, a description of the fabrication of a "rod" is considered a disclosing description for the fabrication of a "filament" and a "fiber," by way of non-limiting example. Additionally, no particular cross-sectional geometry is implied in describing, for example, rods and tubes. Accordingly, it is to be understood that tubes and rods used to form monofiber rods in accordance with implementations and embodiments described herein can be of any cross-sectional geometry including; for example, round, square, regular-polygonal (e.g., pentagonal, hexagonal, octagonal, etc.) and irregular polygonal. The broad interpretative scope attributed to each of these terms, and similar terms, applies equally within the specification and claims.

In accordance with a first illustrative implementation, a plurality of elongated glass filaments is provided. Each filament has opposed first and second ends and a side surface extending between the first and second ends. A material of interest is bound to the side surface of each filament. In one illustrative version,'the binding of the material of interest to the filaments is achieved by coating the filaments with an adhesive binder (i.e., a bonding agent) and adhering the material of interest thereto. At least two filaments to which the material of interest has been bound are then bundled in side-by-side relationship in order to form a filament bundle. The filament bundle is heated and drawn through, for example, an optical fiber drawing tower in order to form a rod incorporating a cross-sectional distribution of the material of interest.

In light of aforementioned limitations associated with previous methods relative to the incorporation of certain materials of interest in glass-based optical waveguides, and glass matrices or arrays fabricated from the same, various implementations of the present invention are well-suited for the inclusion, within glass optical waveguides, of crystalline materials that are susceptible to dissolution in molten glass, by way of non-limiting example. More generally, irrespective of whether a material of interest is itself dissolved, a desired property of interest might be lost from that material of interest if it were introduced into molten glass during the formation of "core bars" or "core rods" configured for use in the early stages of a standard "rod-in-tube" optical fiber fabrication process. Versions of the current process obviate the exposure of the material of interest to molten glass by heating bundled glass filaments coated with the material of interest to a temperature sufficiently high to cause the filaments to coalesce (e.g., mutually fuse), but not so high that the glass melts and the material of interest dissolves therein or the property of interest thereof is otherwise neutralized or lost.

In an alternative implementation, filaments coated with the selected material of interest are bundled inside a containment tube defined by a wall having inner and outer surfaces. The filament bundle and the containment tube are then heated and drawn. As the containment tube and filament bundle are heated and drawn, the coated filaments mutually fuse to form a core rod around which the containment tube collapses and fuses. In at least one version, the material of interest is also bound to the inside surface of the containment tube prior to heating and drawing.

In some versions of a method including the use of a containment tube, the filaments are fabricated from a first glass having a first refractive index and the containment tube is fabricated from a second glass having a second refractive index lower in magnitude than the first refractive index such that the waveguide resulting from heating, drawing and fusing the containment tube and filaments transmits electromagnetic energy by internal reflection. In such a case, the containment tube serves as both (i) a container or sleeve in which the filaments are bundled prior to heating and drawing and (ii) an optical cladding material that facilitates internal reflection of electromagnetic energy after heating and drawing. Accordingly, where applicable and appropriate as indicated by context, the terms "containment tube" and "cladding tube" may be used interchangeably in any of the summary, detailed description, and claims. As an alternative to the bundling of coated filaments in a containment tube, it will be readily appreciated that a set of bundled filaments can be heated and drawn to form a fused core rod and then, subsequently, one or more such fused core rods can be introduced into a cladding tube for heating and drawing to form an internally-reflecting optical waveguide.

Optical waveguides incorporating alternative materials exhibiting disparate properties are of interest to persons involved in various fields of research, science and medicine. Accordingly, alternative versions of the inventive method can be used to incorporate into a glass optical waveguide materials of interest including, but not limited to, at least one of (i) a scintillator material, (ii) a metal, (iii) a refractory material, and (iv) an absorber material configured to absorb electromagnetic energy within a predetermined wavelength range. The use of scintillator materials is of particular interest in the fabrication of detectors used to indirectly detect the presence of energy within a first or primary wavelength range of interest by detecting, instead, energy within a secondary wavelength range of interest that is emitted from a scintillator material when energy within the primary wavelength range impinges upon the scintillator material. Specific scintillator materials emit photons visible to a human eye when impinged upon by x-ray photons and, therefore, such a material is useful in the fabrication of an x-ray detector for use in the medical industry, by way of non-limiting example. Examples of materials that scintillate when impinged upon by x-rays include compounds or mixtures containing at least one of (i) erbium (Er), (ii) cerium (Ce), (iii) lutetium (Lu) and (iv) gadolinium (Gd). Illustrative lutetium-containing materials include compounds of the form LuₓSi_{y}O_{z} and LuₓO_{y}, wherein "x" and "y" are variables. An example of a scintillating material containing gadolinium is Gd₂O₂S. BGO (bismuth germinate Bi₄Ge₃O₁₂) and LYSO (cerium-doped lutetium yttrium orthosilicate) can also be used as the scintillating material of interest. Although a limited set of non-limiting illustrative materials of interest has been provided, it is to be expressly understood that implementations of the invention are more generally concerned with methodologies of including a material of interest within an optical waveguide, and not with the specific material of interest.

As is generally known, the relative refractive indices of core rods and claddings are important factors in forming internally-reflecting waveguides. Accordingly, in various versions, the material of interest used, for example, in coating filaments or shards, or mixing with powderized glass, is index-matched to the core glass.. That is, care is taken to match as closely as practicable the refractive index of the material of interest with the refractive index of the core glass. Similarly, in some situations, such as when the inside surface of a cladding tube is coated with a material or interest, the refractive index of the material of interest might be matched with the refractive index of the glass from which the cladding tube is formed.

Pursuant to the fabrication of various image-conducting, waveguide array products, plural mono-rod waveguides are bundled for heating and drawing in a "multi-draw" step. Once heated and drawn, the plural mono-rod waveguides are adjacently fused in a product that is, in the optical fiber industry, commonly referred to as a "multi". In accordance with some alternative versions, plural "multies" are bundled for heating and drawing to form a "multi-multi" array. Multi arrays and multi-multi arrays formed in accordance with various implementations of the present invention can be treated, machined, polished and handled to form fused array products already known in the optical fiber industry.

Although the formation of optical core rods from filaments coated with a material of interest is conducive to a particularly effective implementation of the present invention, alternative versions form core rods by combining a material of interest with alternatively shaped glass pieces. In one version, glass pulverized into particles such as coarse fragments, shards or fine powder is coated with the material of interest and then the coated glass particles are heated and drawn to form an optical core rod. Such glass particles are introduced into a glass cladding tube for heating and drawing into a fused mono rod in which the particles are mutually fused within and to the cladding tube.

In a second version alternative to the use of coated glass filaments, a containment tube is at least partially filled with a plurality of plate-like glass pieces. Each glass plate has opposed first and second faces, at least one of which is coated with the material of interest. The glass plates are stacked within the cladding tube such that their faces extend along planes orthogonal to the longitudinal axis of the cladding tube. By way of illustrative example, in a case in which the cladding tube is cylindrical, the glass plates are disc-shaped and stacked within the tube in a manner analogous to which rolled coins are contained within a paper or shrink-wrap plastic sheath. With the glass plates stacked within the tube, the plates and cladding tube are heated and drawn such that the plates mutually fuse to form an optical core rod and the cladding tube collapses and fuses around the core rod.

In a third version alternative to the use of coated glass filaments, an optical core rod, or constituent filaments used in the subsequent formation of an optical core rod, are fabricated by combining pulverized (e.g., powderized) glass with pulverized material of interest and then sintering the particulated mixture. As previously suggested relative to one illustrative version, the sintering can occur as the mixed particles are drawn in a containment tube. In an alternative version, mixed particles of glass and material of interest are combined in a mold to form a rod or filament. In one specific example of the latter version, the rod or filament is formed using hot isostatic pressing. Regardless, at least one of such rods or filaments is then situated in a containment tube for heating and drawing in the general manner hereinbefore described.

As those of ordinary skill in the relevant art(s) will appreciate, care must be taken to prevent trapping gas (e.g., air) within a mono rod as it is heated and drawn. In implementations in which filaments are used to form core rods, gas is forced from between filaments, and out an end of the containment tube, as the filament-in-tube assembly is drawn. The forcing out of gas from between filaments is aided by the fact that the filaments are mutually aligned along the direction in which the filaments and tube are heated and drawn (i.e., along the "draw axis"). However, where glass particles or stacked glass plates are used, trapped gas may have to be forced out laterally, and then longitudinally, relative to the draw axis. Accordingly, a higher draw temperature and higher vacuum might be necessary in implementations in which the core rods are not formed from filaments.

Representative implementations and embodiments are more completely described and depicted in the following detailed description and the accompanying drawings.

### BRIEF DESCRIPTION OF THE DRAWINGS

FIG. 1 shows a plurality of elongated glass filaments;
FIGS. 2 depicts the filaments of FIG. 1 coated with a material of interest;
FIG. 3A shows a plurality of coated filaments, such as the filaments of FIG. 2, situated within a containment tube;
FIG. 3B depicts a fused mono rod formed by heating and drawing the bundled filaments and containment tube of FIG. 3A;
FIG. 4A depicts a plurality of adjacently bundled filaments that have been coated with a material of interest;
FIG. 4B depicts a core rod fabricated by heating the bundled filaments;
FIG. 4C illustrates the introduction into a cladding tube of the core rod of FIG. 4B;
FIG. 4D shows a fused mono rod formed by heating and drawing the core rod and cladding tube of FIG. 4C;
FIG. 5 shows a plurality of rod-like optical waveguides bundled for heating and drawing in a fiber drawing tower;
FIG. 5A is a representative section of an illustrative fused multi-array fabricated by heating and drawing bundled the bundled optical waveguides of FIG. 5;
FIG. 5B shows plural multi-arrays made bundled for heating and drawing;
FIG. 5C is a representative section of an illustrative fused multi-multi array fabricated by heating and drawing plural multi-arrays such as the multi-arrays of FIGS. 5A and 5B;
FIG. 6A depicts a plurality of plate-like glass pieces each of which is at least partially coated with a material of interest;
FIG. 6B depicts a plurality of plate-like glass pieces, such as those shown on FIG. 6A, stacked within a glass containment tube;
FIG. 6C shows a fused mono rod formed by heating and drawing the stacked glass pieces and containment tube of FIG. 6B;
FIG. 7A schematically depicts the introduction of a particle mixture containing particles of glass and particles of a material of interest into a mold;
FIG. 7B show the mold of FIG. 7A in an open state;
FIG. 7C depicts a core rod formed by heating the particle mixture of FIG. 7A within the mold of FIGS. 7A and 7B such that the particles of glass and material of interest mutually coalesce;
FIG. 8A schematically depicts the introduction of a particle mixture containing particles of glass and particles of a material of interest into a containment tube; and
FIG. 8B shows a fused mono rod formed by heating and drawing the particle mixture and containment tube of FIG. 8A.

### DETAILED DESCRIPTION

The following description of illustrative embodiments of glass-based optical waveguides, waveguide arrays and methods of fabricating the same is demonstrative in nature and is not intended to limit the invention or its application of uses. The various implementations, aspects, versions and embodiments described in the summary and detailed description are in the nature of non-limiting examples falling within the scope of the appended claims and do not serve to define the maximum scope of the claims.

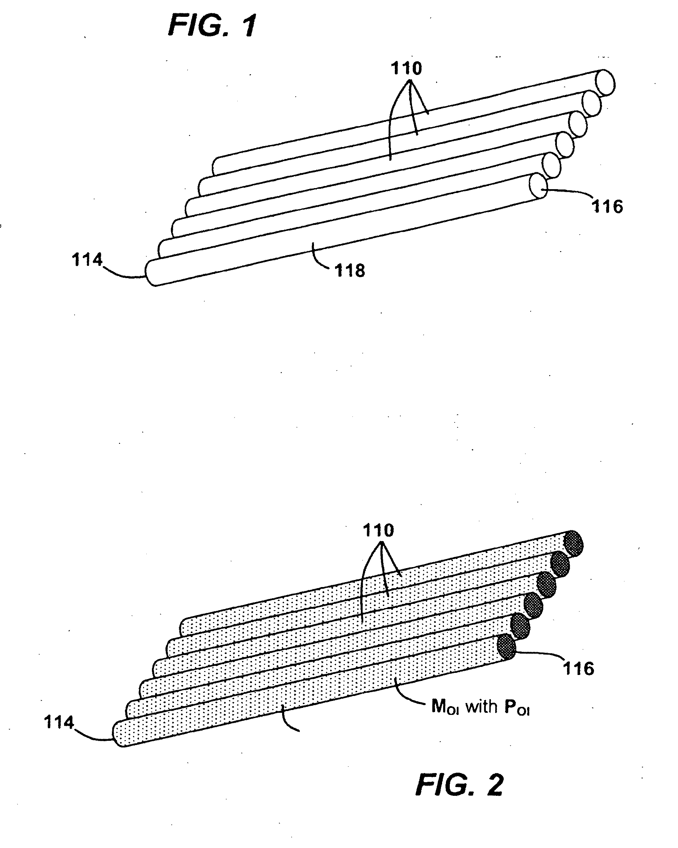

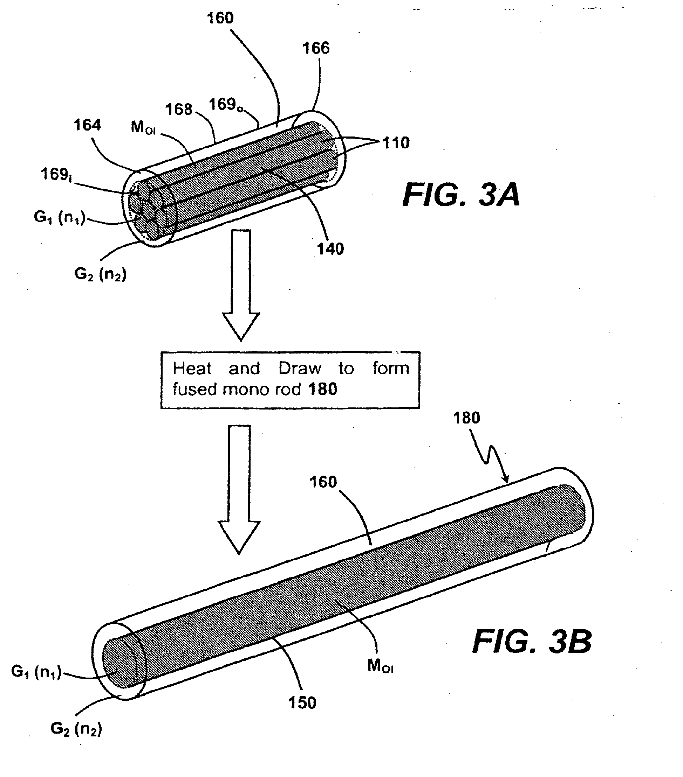

In conjunction with FIGS. 1 through 8B, there are described alternative illustrative methods of fabricating a glass-based optical waveguide internally incorporating, in an undissolved state, a material of interest that is soluble in molten glass or otherwise possesses a property of interest that would be lost were the material of interest exposed to molten glass, irrespective of whether the material of interest dissolves therein. Shown in FIG. 1 is a plurality of glass filaments 110, each of which filaments **110** has longitudinally opposed first and second ends **114** and **116** and a side surface **118** extending between the first and second ends **114** and **116.** As depicted in FIG. 2, the side surface **118** of each filament **110** is treated (e.g., coated) with a material of interest **M**_{OI}having at least one property of interest P_{OI}. In alternative implementations, at least two filaments **110** to which the material of interest **M_{OI}** has been applied are adjacently bundled in side-by-side relationship in order to form a filament bundle **140.** In one version, the coated filaments **110** are bundled within a containment tube **160,** as shown, for example, in FIG. 3A. The containment tube **160** has opposed first and second ends **164** and **166** and is defined by a side wall **168** having inner and outer side surfaces **169ᵢ** and **169ₒ.** Optionally, the material of interest **M_{OI}** is applied to the inner side surface **169ᵢ** of the containment tube **160,** in addition to the filaments **110.** As depicted schematically between FIGS. 3A and 3B, the filament bundle **140** and containment tube **160** are heated and drawn through, for example, an optical fiber drawing tower which, owing to the ubiquitous use of such towers in the relevant art(s), is not shown. As the containment tube **160** and filament bundle **140** are heated and drawn, the coated filaments **110** mutually fuse to form a core rod **150** around which the containment tube **160** collapses and fuses to form a fused mono rod **180,** as shown in FIG. 3B.

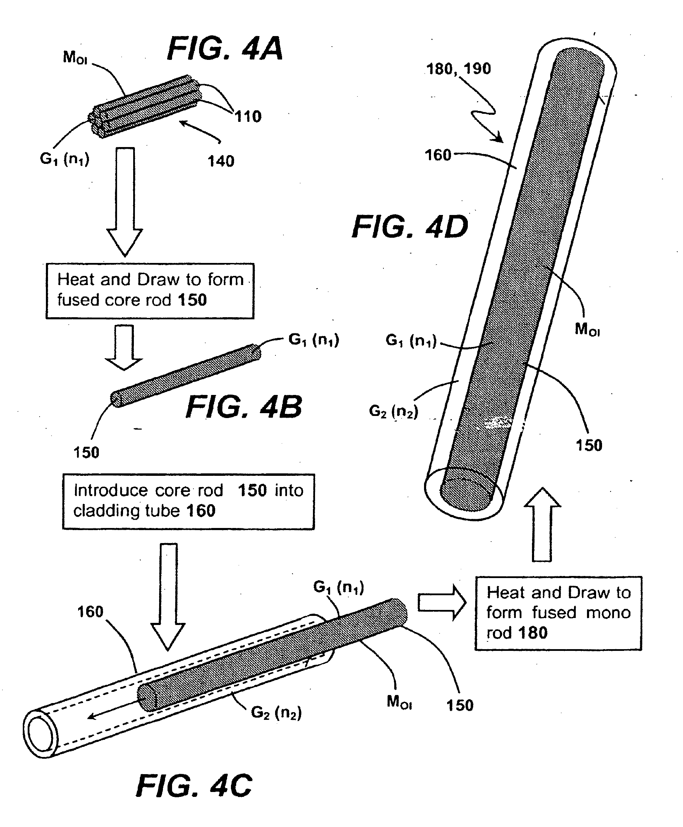

In another, similar version, discussed with illustrative reference to FIGS. 4A through 4D, glass filaments **110** are coated with a material of interest **M_{OI}** and bundled to form a filament bundle **140** in the general manner shown in FIG. 4A. The bundled filaments **110** are then heated and drawn to form a fused core rod **150** such as that shown in FIG. 4B. Referring to FIG. 4C, in a procedure analogous to the well-known rod-in-tube method, the core rod **150** is axially introduced into a cladding tube **160** and the cladding tube **160** and core rod **150** are heated and drawn such that the cladding tube **160** collapses and fuses around the core rod **150** to form a fused mono rod **180,** as shown in FIG. 4D. As with the version of FIGS. 3A and 3B, the inner surface **169i** of the containment tube can be coated with the material of interest **M_{OI}** prior to heating and drawing the core rod **150** and containment tube **160.**

In alternative implementations, including those depicted in FIGS. 3A through 3B and 4A through 4D, the bundled filaments **110,** and resulting core rod **150,** are fabricated from a light-transmissive first glass **G₁** having a first refractive index **n₁** and the containment tube **160** is fabricated from a light-transmissive second glass **G₂** having a second refractive index n₂ lower in magnitude than the first refractive index n₁ such that the fused mono rod **180** formed by heating, drawing and mutually fusing the containment tube **160** and filaments **110** is an optical waveguide **190** that transmits electromagnetic energy by internal reflection.

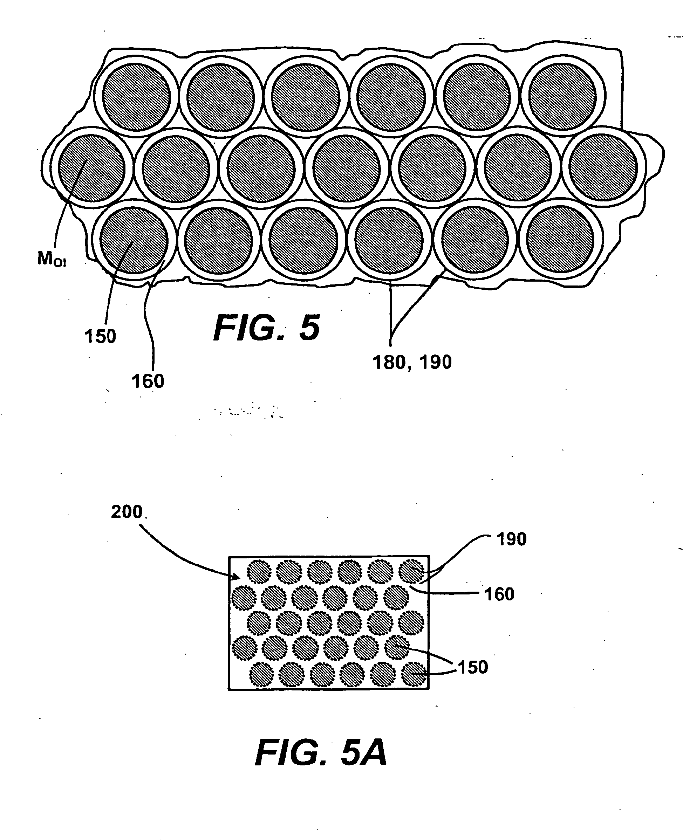

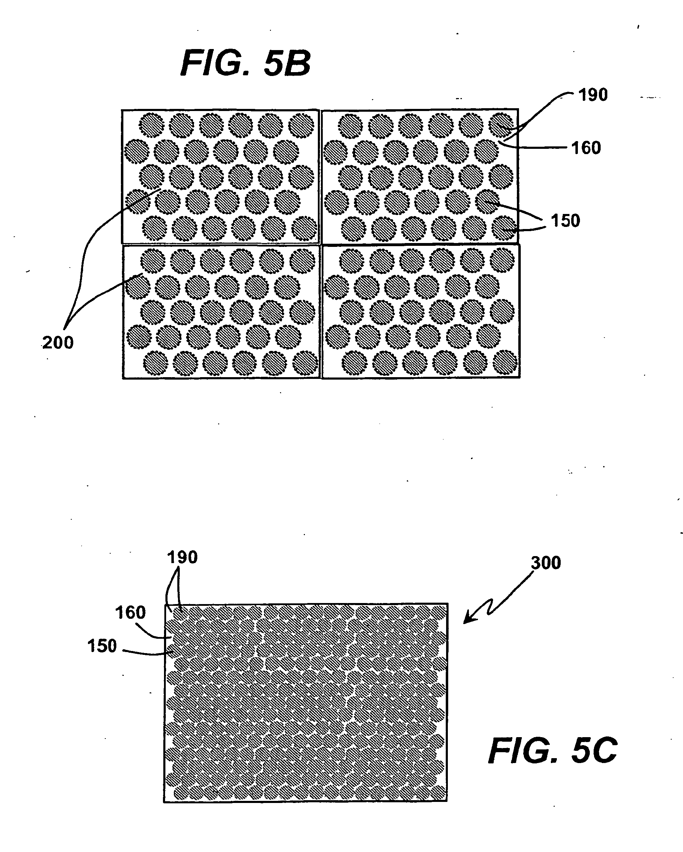

In order to form an image-conducting waveguide array (e.g., optical fiber array), plural mono rods **180** in the form of waveguides **190** incorporating the material of interest **M_{OI}** are bundled, as shown in FIG. 5, for heating and drawing in a "multi-draw" step. After heating and drawing, the plural waveguides **190** are adjacently fused in a product referred to as a "multi" or multi array **200,** an illustrative section of which is shown in FIG. 5A. Consistent with multi-draw steps associated with traditional fiber drawing methods, the cladding tubes **160** in the bundle in FIG. 5 are, in the product of FIG. 5A, fused into a contiguous glass matrix within which the optical core rods **150** are retained in mutually fixed positions. In accordance with some alternative versions, represented by FIGS. 5B and 5C, plural multi arrays **200** are bundled for heating and drawing to form a "multi-multi" array **300.**

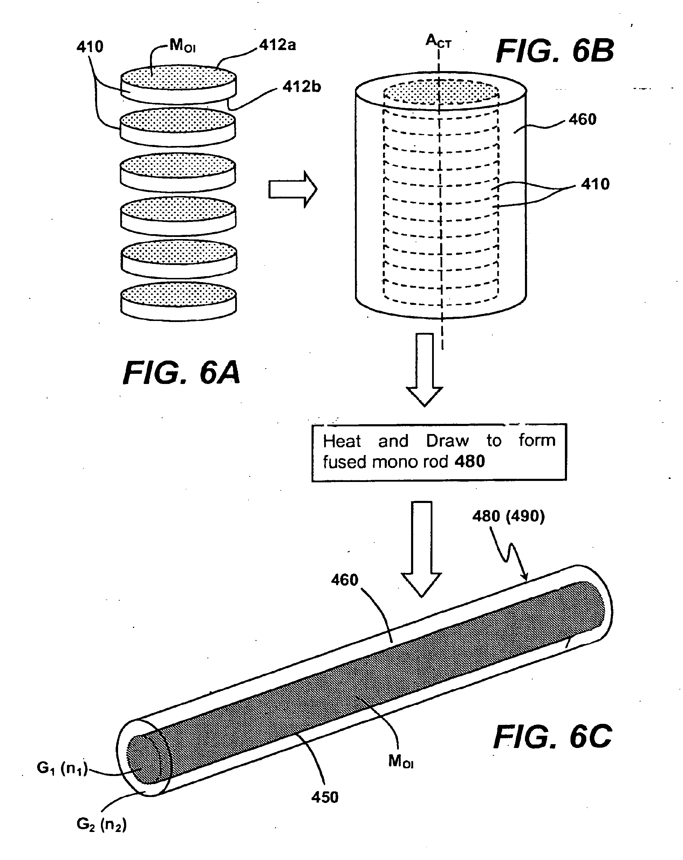

As indicated in the summary, included within the scope and contemplation of the invention are implementations in which core rods and mono rods are formed by a method other than bundling, heating and drawing constituent filaments pre-treated with a material of interest **M_{OI}.**According to one alternative implementation, described with initial reference to FIG. 6A, a plurality of plate-like glass pieces **410** (alternatively, "glass plates **410")** is provided. Each glass plate **410** has opposed first and second faces **412a** and **412b,** at least one of which is coated with the material of interest **M_{OI}.** As illustratively depicted in FIG. 6B, the coated glass plates **410** are adjacently stacked, in face-to-face relationship, within a containment tube **460** such that their faces **412a** and **412b** extend along planes (implied, but not shown) orthogonal to a containment-tube axis **A_{CT}** along which the length of the containment tube **460** extends. In the example of FIG. 6B, the containment tube **460** is cylindrical. Accordingly, the glass plates **410** are disc-shaped and stacked within the tube **460** in a manner analogous to which rolled coins are contained within a paper or shrink-wrap-plastic sheath.

As depicted schematically between FIGS. 6B and 6C, the stacked glass plates **410** and containment tube **460** are heated and drawn through, for example, an optical fiber drawing tower, which is not shown for the reason previously stated. As the containment tube **460** and glass plates **410** are heated and drawn, the glass plates **410** mutually fuse to form a core rod **450** around which the containment tube **460** collapses and fuses to form a fused mono rod **480,** as shown in FIG. 6C. In one illustrative implementation, the stacked glass plates **410,** and resulting core rod **450,** are fabricated from a light-transmissive first glass G₁ having a first refractive index **n**₁ and the containment tube **460** is fabricated from a light-transmissive second glass **G**₂ having a second refractive index **n**₂ lower in magnitude than the first refractive index **n**₁ such that the resultant fused mono rod **480** is an optical waveguide **490** that transmits electromagnetic energy by internal reflection.

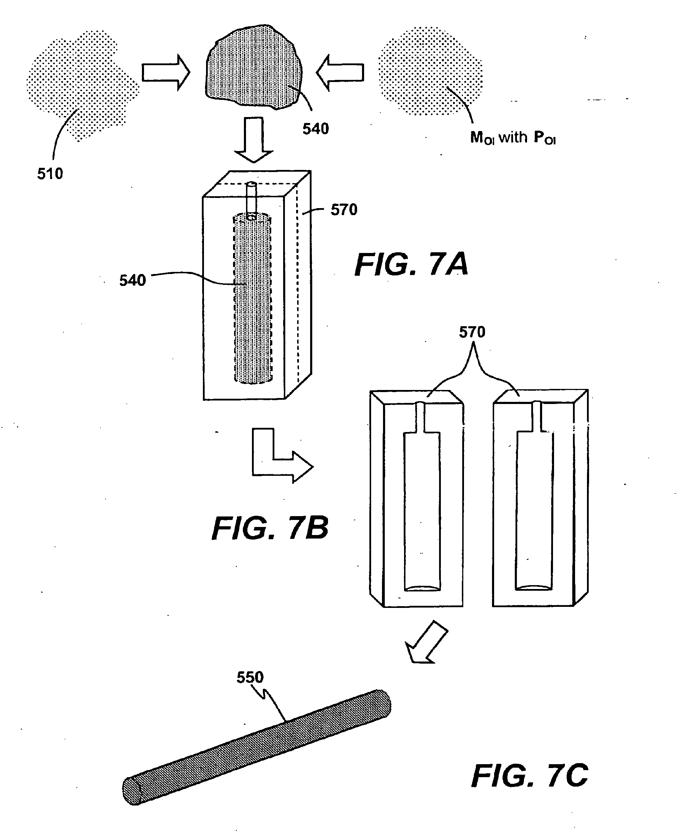

An alternative implementation involves the formation of an optical core rod, or the formation of constituent filaments used in the subsequent formation of an optical core rod, in a container such as a mold. For purposes of explanation, the illustrative fabrication of a core rod **550** is described with reference to FIGS. 7A through 7C. As shown in FIG. 7A, glass particles **510** and particles of a material of interest **M**_{OI} are combined to form a particle mixture **540.** The particle mixture **540** is introduced into a mold **570.** In one version, the particle mixture **540** is sintered within the mold **570** at a temperature sufficiently high that the glass particles **510** and the particles of the material of interest **M_{OI}** mutually coalesce, but not so high that the glass particles **510** melt and neutralize the property of interest **P_{OI}** for which the material of interest **M_{OI}** is being incorporated. In an alternative implementation, the particle mixture **540** is subjected to hot isostatic pressing. While isostatic pressing is frequently implemented within a chamber in which the object being formed is surrounded by a fluid, for illustrative purposes, this can still be regarded as a type of "molding" process and, therefore, reference to the mold **570** generically illustrated in FIG. 7A is sufficient to support a description of hot isostatic pressing as well as sintering.

With reference to FIGS. 7B and 7C, once the particle mixture **540** has sufficiently coalesced to define a self-supporting core rod **550,** the mold **570** is opened and the core rod **550** is removed. The core rod **550** can then be subsequently processed in, for example, a manner analogous to the manner in which the core rod **150** of FIGS. 4B through 4D is processed in order to form a fused mono rod **180.**

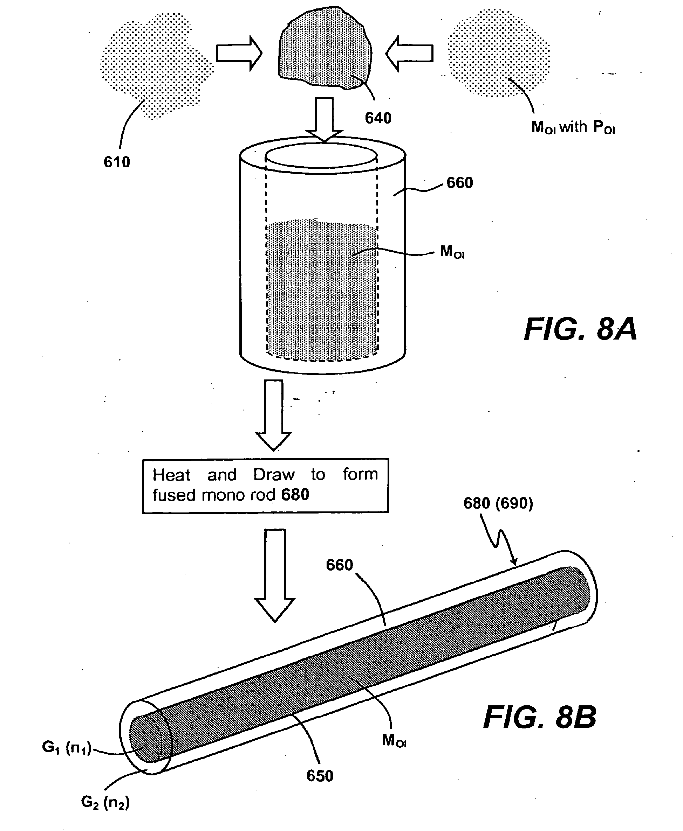

In still an additional version described with initial reference to FIG. 8A, glass particles **610** are combined with particles of a material of interest **M_{OI}** having a property of interest **P_{OI}** in order to form a particle mixture **640.** The particle mixture **640** is introduced into a containment tube **660.** As depicted schematically between FIGS. 8A and 8B, the particle mixture **640** and containment tube **660** are heated and drawn. As the containment tube **660** and particle mixture **640** are heated and drawn, the particle mixture **640** coalesces to form a core rod **650** around which the containment tube **660** collapses and fuses to form a fused mono rod **680,** as shown in FIG. 8B. In one illustrative implementation, the resulting core rod **650** is comprises a light-transmissive first glass G₁ having a first refractive index **n**₁ and the containment tube **660** is fabricated from a light-transmissive second glass **G₂** having a second refractive index **n₂** lower in magnitude than the first refractive index **n₁** such that the resultant fused mono rod **680** is an optical waveguide **690** that transmits electromagnetic energy by internal reflection.

The foregoing is considered to be illustrative of the principles of the invention. Furthermore, since numerous modifications and changes will readily occur to those skilled in the art, it is not desired that the foregoing limit the invention to the exact construction and operation shown and described.

## Claims

1. A method of incorporating within a glass optical waveguide a material of
interest having a property of interest that would be neutralized by exposure to molten glass, the method comprising:
combining, in a container, pieces of a light-transmissive first glass with the material of interest; and
heating the combined first glass and material of interest to a temperature sufficiently high to cause the glass pieces and material of interest to mutually coalesce in order to form a light-transmissive core rod, but not high enough that the first glass melts and neutralizes the property of interest.

2. The method of claim 1 wherein the first glass and material of interest are
combined in a glass containment tube and the glass containment tube, first glass and material of interest are heated and drawn together in order to form the first glass and material of interest into the core rod about which the containment tube collapses and fuses to form a fused mono rod.

3. The method of claim 2 wherein the material of interest is at least one of
(i) a scintillator material;
(ii) a metal;
(iii) a refractory material; and
(iv) an absorber material configured to absorb electromagnetic energy
within a predetermined wavelength range.

4. The method of claim 2 wherein the first glass and the material of interest
that are combined in the glass containment tube are each in the form of particles.

5. The method of claim 1 wherein
the container in which the first glass and material of interest are combined
is a mold; and
each of the first glass and material of interest is introduced into the mold in the form of particles which, combined, constitute a particle mixture.

6. The method of claim 5 wherein, while in the mold,
the particle mixture
undergoes one of sintering and hot isostatic pressing in order to form the particle mixture into the core rod.

7. The method of claim 6 further comprising introducing the core rod into a containment tube; and heating and drawing the containment tube and core rod such that the
containment tube collapses and fuses around the core rod in order to form a fused mono rod.

8. The method of one of claims 2 or 7 wherein the core rod has a first refractive index and
the containment tube has a second refractive index
lower in magnitude than the first refractive index such that the mono rod is an optical waveguide that transmits electromagnetic energy by internal reflection.

9. The method of one of claims 2 or 8 wherein
the glass pieces are filaments and the step of combining the glass pieces with the material of interest comprises coating the glass filaments with particles of the material of interest; and
the coated filaments are adjacently bundled in side-by-side relationship in order to form a filament bundle that, when heated and drawn, forms the core rod.

10. The method of one of claims 1, 5 or 9 wherein the material of
interest is at least one of
(v) a scintillator material;
(vi) a metal;
(vii) a refractory material; and
(viii) an absorber material configured to absorb electromagnetic energy within a predetermined wavelength range.

11. A method of incorporating within a glass optical waveguide an undissolved
material of interest that is soluble in molten glass, the method comprising:
combining, in a container, pieces of a light-transmissive first glass with a material of interest that is soluble in molten glass and exhibits a predetermined property of interest that would be lost if the material of interest were dissolved; and
heating the combined first glass and material of interest to a temperature sufficiently high to cause the glass pieces and material of interest to mutually coalesce in order to form a light-transmissive core rod, but not high enough that the first glass melts and the material of interest dissolves therein.

## Patentansprüche

1. Verfahren zum Einbinden eines interessierenden Materials mit einer interessierenden Eigenschaft, die durch Einwirkung von geschmolzenem Glas aufgehoben werden würde, in einen Glaslichtwellenleiter, wobei das Verfahren umfasst:
Zusammenfügen, in einem Behälter, von Stücken eines lichtdurchlässigen ersten Glases mit dem interessierenden Material, und
Erwärmen der Kombination aus erstem Glas und interessierendem Material auf eine Temperatur, die hinreichend hoch ist, dass sich die Glasstücke und das interessierende Material miteinander verbinden, um einen lichtdurchlässigen Kernstab zu bilden, aber nicht hoch genug, dass das erste Glas schmilzt und die interessierende Eigenschaft aufhebt.

2. Verfahren nach Anspruch 1, wobei das erste Glas und das interessierende Material in einem Behälterrohr aus Glas zusammengefügt werden, und wobei das Behälterrohr aus Glas, das erste Glas und das interessierende Material zusammen erwärmt und gezogen werden, um das erste Glas und das interessierende Material zu einem Kernstab zu formen, um den herum das Behälterrohr kollabiert und aufschmilzt, um einen verschmolzenen Monostab zu bilden.

3. Verfahren nach Anspruch 2, wobei das interessierende Material mindestens eines der folgenden ist:
(i) ein Szintillatormaterial,
(ii) ein Metall,
(iii) ein feuerfestes Material, und
(iv) ein Absorbermaterial, das zur Absorption von elektromagnetischer Energie innerhalb eines vorgegebenen Wellenlängenbereiches konfiguriert ist.

4. Verfahren nach Anspruch 2, wobei das erste Glas und das interessierende Material, die in dem Behälterrohr aus Glas zusammengefügt werden, jeweils in Form von Partikeln vorliegen.

5. Verfahren nach Anspruch 1, wobei der Behälter, in dem das erste Glas und das interessierende Material zusammengefügt werden, eine Form darstellt, und wobei das erste Glas und das interessierende Material jeweils in Form von Partikeln, die zusammengefügt eine Partikelmischung bilden, in die Form eingebracht werden.

6. Verfahren nach Anspruch 5, wobei die Partikelmischung, während sie sich in der Form befindet, entweder einem Sintern oder einem isostatischen Heißpressen unterzogen wird, um aus der Partikelmischung den Kernstab auszubilden.

7. Verfahren nach Anspruch 6, ferner umfassend:
Einbringen des Kernstabs in ein Behälterrohr, und
Erwärmen und Ziehen des Behälterrohrs und des Kernstabs,
so dass das Behälterrohr kollabiert und um den Kernstab herum aufschmilzt, um einen verschmolzenen Monostab zu bilden.

8. Verfahren nach einem der Ansprüche 2 oder 7, wobei der Kernstab einen ersten Brechungsindex aufweist und das Behälterrohr einen zweiten Brechungsindex aufweist, der kleiner als der erste Brechungsindex ist, so dass der Monostab einen Lichtwellenleiter darstellt, der elektromagnetische Energie durch innere Reflexion überträgt.

9. Verfahren nach einem der Ansprüche 2 oder 8, wobei die Glasstücke Filamente sind und der Schritt des Zusammenfügens der Glasstücke mit dem interessierenden Material das Beschichten der Glasfilamente mit Partikeln aus dem interessierenden Material umfasst, und wobei die beschichteten Filamente aneinander angrenzend gebündelt werden, um ein Filamentbündel zu bilden, das, wenn es erwärmt und gezogen wird, den Kernstab bildet.

10. Verfahren nach einem der Ansprüche 1, 5 oder 9, wobei das interessierende Material mindestens eines der folgenden ist:
(v) ein Szintillatormaterial,
(vi) ein Metall,
(vii) ein feuerfestes Material, und
(viii) ein Absorbermaterial, dass zur Absorption von elektromagnetischer Energie innerhalb eines vorgegebenen Wellenlängenbereiches konfiguriert ist.

11. Verfahren zum Einbinden eines nicht gelösten interessierenden Materials, das in geschmolzenem Glas löslich ist, in einen Glaslichtwellenleiter, wobei das Verfahren umfasst:
Zusammenfügen, in einem Behälter, von Stücken eines lichtdurchlässigen ersten Glases mit einem interessierenden Material, das in geschmolzenem Glas löslich ist und das eine vorgegebene interessierende Eigenschaft aufweist, die verloren ginge, würde sich das interessierende Material auflösen, und
Erwärmen der Kombination aus erstem Glas und interessierendem Material auf eine Temperatur, die hinreichend hoch ist, dass sich die Glasstücke und das interessierende Material miteinander verbinden, um einen lichtdurchlässigen Kernstab zu bilden, aber nicht hoch genug, dass das erste Glas schmilzt und das interessierende Material sich darin auflöst.

## Revendications

1. Procédé d'incorporation dans un guide d'ondes optique en verre d'un matériau d'intérêt présentant une propriété d'intérêt qui serait neutralisée par exposition à du verre fondu, le procédé consistant à :
combiner, dans un récipient, des morceaux d'un premier verre transmettant la lumière avec le matériau d'intérêt ; et
chauffer le premier verre et le matériau d'intérêt combinés à une température suffisamment élevée pour amener les morceaux de verre et le matériau d'intérêt à fusionner mutuellement afin de former une tige de coeur transmettant la lumière, mais pas suffisamment élevée pour que le premier verre fonde et neutralise la propriété d'intérêt.

2. Procédé selon la revendication 1, dans lequel le premier verre et le matériau d'intérêt sont combinés dans un tube de confinement de verre et le tube de confinement de verre, le premier verre et le matériau d'intérêt sont chauffés et étirés ensemble afin de mettre le premier verre et le matériau d'intérêt sous la forme de la tige de coeur autour de laquelle le tube de confinement s'affaisse et fusionne pour former une mono-tige fusionnée.

3. Procédé selon la revendication 2, dans lequel le matériau d'intérêt est au moins l'un des suivants :
(i) un matériau scintillateur ;
(ii) un métal ;
(iii) un matériau réfractaire ; et
(iv) un matériau absorbant configuré pour absorber de l'énergie électromagnétique dans une gamme de longueurs d'onde prédéterminée.

4. Procédé selon la revendication 2, dans lequel le premier verre et le matériau d'intérêt qui sont combinés dans le tube de confinement de verre, sont chacun sous la forme de particules.

5. Procédé selon la revendication 1, dans lequel :
le récipient dans lequel le premier verre et le matériau d'intérêt sont combinés, est un moule ; et
chacun du verre et du matériau d'intérêt est introduit dans le moule sous la forme de particules qui, lorsqu'elles sont combinées, constituent un mélange de particules.

6. Procédé selon la revendication 5, dans lequel, pendant qu'il est dans le moule, le mélange de particules est soumis à l'un d'un frittage et d'un pressage isostatique à chaud afin de mettre le mélange de particules sous la forme de la tige de coeur.

7. Procédé selon la revendication 6, consistant en outre à :
introduire la tige de coeur dans le tube de confinement ; et
chauffer et étirer le tube de confinement et la tige de coeur de façon que le tube de confinement s'affaisse et fusionne autour de la tige de coeur afin de former une mono-tige fusionnée.

8. Procédé selon l'une des revendications 2 ou 7, dans lequel la tige de coeur a un premier indice de réfraction et le tube de confinement a un second indice de réfraction dont la valeur est inférieure à celle du premier indice de réfraction de telle façon que la mono-tige soit un guide d'ondes optique qui transmet de l'énergie électromagnétique par réflexion interne.

9. Procédé selon l'une des revendications 2 ou 8, dans lequel les morceaux de verre sont des filaments et l'étape consistant à combiner les morceaux de verre au matériau d'intérêt consiste à revêtir les filaments de verre de particules du matériau d'intérêt ; et
les filaments revêtus sont groupés de façon adjacente les uns aux autres et côte à côte afin de former un faisceau de filaments qui, lorsqu'il est chauffé et étiré, forme le tige de coeur.

10. Procédé selon l'une des revendications 1, 5 ou 9, dans lequel le matériau d'intérêt est au moins l'un des suivants :
(v) un matériau scintillateur ;
(vi) un métal ;
(vii) un matériau réfractaire ; et
(viii) un matériau absorbant configuré pour absorber de l'énergie électromagnétique dans une gamme de longueurs d'onde prédéterminée.

11. Procédé d'incorporation dans un guide d'ondes optique en verre d'un matériau d'intérêt non dissous qui est soluble dans le verre fondu, le procédé consistant à :
combiner, dans un récipient, des morceaux d'un premier verre transmettant la lumière avec un matériau d'intérêt qui est soluble dans le verre fondu et présente une propriété d'intérêt prédéterminée qui serait perdue si le matériau d'intérêt était dissous ; et
chauffer le premier verre et le matériau d'intérêt combinés à une température suffisamment élevée pour amener les morceaux de verre et le matériau d'intérêt à fusionner mutuellement afin de former une tige de coeur transmettant la lumière, mais pas suffisamment élevée pour que le premier verre fonde et que le matériau d'intérêt s'y dissolve.
